# EUROPEAN PATENT APPLICATION

(11) **EP 4 470 393 A1**
(43) Date of publication of application: **04.12.2024**
(21) Application number: 23382519.9
(22) Date of filing: 31.05.2023
(51) Int. Cl.: A23N 1/00, B30B 9/22, A47J 19/02

(54) **AN AUTOMATIC FRUIT SQUEEZING MACHINE AND A MEMBRANE ARRANGEMENT FOR AN AUTOMATIC FRUIT SQUEEZING MACHINE**

(71) Applicant: Reenginy Tecnologia SL, 08013 Barcelona (ES)
(72) Inventor: RUIZ TARRÉS, RAMÓN MARÍA, Barcelona (ES)
(74) Representative: Ponti & Partners, S.L.P

(57) **Abstract**

The present invention relates to an automatic fruit squeezing machine, comprising:
- a motorised rotating squeezing element (1) for squeezing a pulp of a portion of fruit (F) when rotating about a rotating axis (A1); and
- a membrane arrangement (M), comprising a first membrane (2) and a second membrane (3) that define between them a space (Z) to be occupied, in use, by the portion of fruit (F) to be squeezed, in such a manner that the action of squeezing the pulp is carried out when the portion of fruit (F) is pressed against a first side (2a) of the first membrane (2) onto the motorised rotating squeezing element (1), when the motorised rotating squeezing element (1) is in operation and contacting a second side (2b) of the membrane (2).

The present invention also relates to a membrane arrangement like that of the automatic fruit squeezing machine of the invention.

## Description

### Field of the Invention

The present invention generally relates, in a first aspect, to an automatic fruit squeezing machine, which has improved hygienic conditions and avoids leakage of squeezed juice.

In a second aspect, the present invention relates to a membrane arrangement for an automatic fruit squeezing machine, allowing the squeezing process being carried out with improved hygienic conditions and avoiding the leakage of squeezed juice.

### Background of the Invention

Automatic fruit squeezing machines comprising the features of the preamble of claim 1 are known in the art.

That's the case of the automatic fruit squeezing machine disclosed in patent EP3488742B1, which comprises:
- a motorised rotating squeezing element for squeezing a pulp of a portion of fruit when rotating about a rotating axis; and
- a membrane arrangement, comprising a membrane at least partially made of an elastic material and configured and arranged to be interposed between the motorised rotating squeezing element and a space to be occupied, in use, by the portion of fruit to be squeezed, in such a manner that the action of squeezing the pulp is carried out when the portion of fruit is pressed against a first side of said membrane onto the motorised rotating squeezing element, when said motorised rotating squeezing element is in operation and contacting a second side of the membrane.

Although the automatic fruit squeezing machine disclosed in patent EP3488742B1 improves the hygienic conditions and reduces the manipulation of the pulp, these can indeed be further improved, since for that machine the user still has to manipulate the portion of fruit to hold the same until the lid is closed, and juice leaks can occur through areas other than that corresponding to the juice outlet.

It is necessary to offer an alternative to the state of the art, which covers the gaps mentioned above, particularly by providing an automatic fruit squeezing machine which does not have the above mentioned drawbacks and limitations of the machine of EP3488742B1, and where the hygienic conditions are really improved, and the leakage of squeezed juice is avoided.

### Description of the Invention

To that end, the present invention relates, in a first aspect, to an automatic fruit squeezing machine, comprising:
- a motorised rotating squeezing element for squeezing a pulp of a portion of fruit when rotating about a rotating axis; and
- a membrane arrangement, comprising a membrane at least partially made of an elastic material and configured and arranged to be interposed between the motorised rotating squeezing element and a space to be occupied, in use, by the portion of fruit to be squeezed, in such a manner that the action of squeezing the pulp is carried out when the portion of fruit is pressed against a first side of said membrane onto the motorised rotating squeezing element, when said motorised rotating squeezing element is in operation and contacting a second side of the membrane.

In contrast to the automatic fruit squeezing machines known in the prior art, in the automatic fruit squeezing machine of the first aspect of the present invention the above mentioned membrane is a first membrane, and the membrane arrangement further comprises a second membrane, also at least partially made of an elastic material, wherein said space to be occupied, in use, by the portion of fruit to be squeezed, is defined between said first and second membranes.

Hence, the portion of fruit only contacts opposite inner faces of the first and second membranes, which means that the user only has to touch the outer faces of those first and second membranes, which are clean, i.e. free of any fruit remains, as they don't contact with the portion of fruit or with the juice obtained from it, which highly improves the hygienic conditions of the squeezing process and reduces the manipulation of the pulp by the user.

For an embodiment, the first and second membranes are made to confine said space, except for an opening defining a liquid outlet for the expulsion of the juice obtained from the squeezed pulp of the portion of fruit. Hence, the hygienic conditions are further improved, as no juice leaks can occur through areas other than that corresponding to the juice outlet of the membranes.

According to an embodiment, the first and second membranes comprise or are joined to respective peripheral edges configured to retain in place the membrane arrangement when the motorised rotating squeezing element is in operation, particularly to prevent the membranes of the membrane arrangement from wrinkling when the motorised rotating squeezing element comes into action. If the membranes wrinkled, correct squeezing would not be possible, and the membranes would be damaged.

For an implementation of that embodiment, those peripheral edges are rigid, while for other alternative or complementary implementations they include one or more coupling configurations (such as recesses or protrusions) to couple the same to a housing of the machine.

In an embodiment of the automatic fruit squeezing machine of the first aspect of the present invention, the first and second membranes are hinged to each other.

According to an embodiment, the first and second membranes are couplable to each other (for example, by an elastic coupling), to, in use, encapsulate the portion of fruit within the above mentioned space.

For another embodiment, the first and second membranes are not couplable to each other but just define the above mentioned space by mutually overlapping at least a portion of them.

For an embodiment, the first membrane has a central plateua-shaped region with a convex side at said first side defining a surface configured for positioning the portion of fruit to be squeezed and a concave side at said second side defining a recess for receiving the motorised rotating squeezing element.

This plateau-shaped region facilitates the centring of the fruit portion and makes it possible for the first membrane to have more surface of elastic material which can then be deformed with less effort when the squeezing element is in operation.

Advantageously, the motorised rotating squeezing element is arranged to contact the inner surface of the plateau-shaped region. It has been found this arrangement reduces the vertical path that the squeezing element must displace to squeeze the portion of fruit so that time spent in squeezing the portion of fruit is reduced.

Again advantageously, the convex side of the plateau-shaped region defining the surface configured for positioning the portion of fruit has a diameter including the diameter of the portion of fruit positioned onto the plateau-shaped region. Preferably, said surface configured for positioning the portion of fruit has a diameter equal or less than 100 mm. More preferably, a diameter between 50 and 85 mm.

For an implementation of that embodiment, the first membrane comprises at the first side, around the central plateua-shaped region, a peripheral edge having a discontinuity, a channel being defined between side walls of said central plateau-shaped region and said peripheral edge for the flowing of the juice obtained from the squeezed pulp of the portion of fruit towards a liquid outlet at said discontinuity.

For an embodiment, the second membrane has a central concave region at a first side facing the first side of the first membrane, for fitting a convex portion of the portion of fruit.

For an implementation of that embodiment, the above mentioned central concave region is delimited by a perimeter frame protruding from the first side of the second membrane, wherein a perimeter rim with a larger diameter than said perimeter frame also protrudes from the first side of the second membrane, more than said perimeter frame, such that a free edge of said perimeter rim is configured to, in use, abut against a perimeter region of the bottom of said channel, and wherein said perimeter rim also has a discontinuity configured to, in use, communicate with the discontinuity of the peripheral edge of the first membrane.

According to an embodiment, the automatic fruit squeezing machine of the first aspect of the present invention further comprises a housing where the motorised rotating squeezing element is housed, said housing having a support wall for removably supporting thereon the first membrane, by its second surface, said support wall having a central through opening configured and arranged for being at least partially traversed by the motorised rotating squeezing element when in operation, to contact and push against the second side of the first membrane and thus elastically deform at least part of the first membrane to squeeze the pulp of the portion of fruit present in said space.

For an implementation of that embodiment, the above mentioned housing further comprises a displaceable cover lid configured and arranged to removably hold, at a first side facing said support wall, the second membrane, by a second side thereof, such that, in use, the cover lid and the second membrane are displaced towards the support wall and first membrane.

For a variant of that implementation, the displaceable cover lid has, at said first side, a central concave region, and an elastic material element being fitted into said central concave region, adopting a corresponding concave shape and defining a concave recess, wherein the elastic material of said elastic material element is softer than the elastic material of the second membrane, a central convex region of a second side of the second membrane, when the second membrane is hold by the displaceable cover lid, at least partially occupying said concave recess and contacting and deforming the elastic material element when, in use, the second membrane is being elastically deformed towards said elastic material element when the portion of fruit to be squeezed is present in said space and is being squeezed.

The softer material of the elastic material element fitted into the central concave region of the cover lid acts as a cushion, distributing the pressure exerted by the squeezing element and allowing the pulp to be squeezed in a homogeneous way. In fact, it has been found that this softer elastic material element allows to absorb the irregularities of the skin of the portion of fruit. This is not trivial because the thickness of the skin of the fruits is very heterogeneous. The applicant has noticed that without the softer elastic material element it happened that, where the skin of the fruit was thicker, the squeezing operation results with areas of the skin peeled, whereas where the skin of the fruit was thinner, some parts of pulp were left unsqueezed.

Once the juice has been obtained, the portion of squeezed fruit is removed. Subsequently, the membrane arrangement can be withdrawn from the cover lid and housing by a user, in order to be cleaned properly, to be ready for a further use. This means, that the parts of the machine other than the membrane arrangement don't need to be cleaned as they don't get dirtied by fruit remains, which highly improves the hygienic conditions.

For an embodiment, the motorised rotating squeezing element has a rotating extracting bulb comprising a convex tip fixed to freely rotate about the above mentioned rotating axis, or about an axis aligned or parallel thereto, and a plurality of rollers, having a cylinder or cylindroid shape, fixed to freely rotate along respective tilted longitudinal axes that converge towards said convex tip and that are located radially around said rotating axis, extending from a base of the extracting bulb to said convex tip.

Thanks to these features, the machine includes a rotating extracting bulb wherein the plurality of rollers all are able to rotate at the same time to allow squeezing the pulp by taking the entire volume of pulp of the portion of fruit. Besides, it has been found said rollers contact the first membrane to carry out efficient squeezing by rolling without damaging said membrane by dragging of its elastic material.

In a second aspect, the present invention relates to a membrane arrangement for an automatic fruit squeezing machine, wherein the membrane arrangement comprises a membrane at least partially made of an elastic material and configured and arranged to be interposed between a motorised rotating squeezing element of the automatic fruit squeezing machine and a space to be occupied, in use, by the portion of fruit to be squeezed, in such a manner that the action of squeezing the pulp is carried out when the portion of fruit is pressed against a first side of said membrane onto the motorised rotating squeezing element, when said motorised rotating squeezing element is in operation and contacting a second side of the membrane.

In contrast to the membrane arrangements known in the prior art, in the membrane arrangement of the second aspect of the present invention the above mentioned membrane is a first membrane, and the membrane arrangement further comprises a second membrane, also at least partially made of an elastic material, wherein said space to be occupied, in use, by the portion of fruit be squeezed, is defined between said first and second membranes.

For an embodiment, the membrane arrangement of the second aspect of the present invention is constituted as the membrane arrangement of the automatic fruit squeezing machine of the first aspect of the present invention, for any of its embodiments.

A further aspect of the present invention relates to a motorised rotating squeezing element for a fruit squeezing machine, wherein the motorised rotating squeezing element is configured for squeezing a pulp of a portion of fruit when rotating about a rotating axis and has a rotating extracting bulb comprising a convex tip fixed to freely rotate about said rotating axis, or about an axis aligned or parallel thereto, and a plurality of rollers, having a cylinder or cylindroid shape, fixed to freely rotate along respective tilted longitudinal axes that converge towards said convex tip and that are located radially around said rotating axis, extending from a base of the extracting bulb to the convex tip.

Thanks to these features, a motorised rotating squeezing element is provided including a rotating extracting bulb wherein the plurality of rollers all are able to rotate at the same time to allow squeezing the pulp by taking the entire volume of pulp of a portion of fruit. Besides, it has been found said rollers contact the first membrane to carry out efficient squeezing by rolling without damaging said membrane by dragging of its elastic material.

An additional aspect of the present invention relates to a fruit squeezing machine, comprising the motorised rotating squeezing element of the above described further aspect of the present invention.

For an embodiment of that additional aspect, the fruit squeezing machine further comprises a membrane arrangement, comprising a membrane at least partially made of an elastic material and configured and arranged to be interposed between the motorised rotating squeezing element and a space to be occupied, in use, by the portion of fruit to be squeezed, in such a manner that the action of squeezing the pulp is carried out when the portion of fruit is pressed against a first side of said membrane onto the motorised rotating squeezing element, when said motorised rotating squeezing element is in operation and contacting a second side of the membrane.

For a further embodiment of that additional aspect, the above mentioned membrane is a first membrane, and the membrane arrangement further comprises a second membrane, also at least partially made of an elastic material, wherein said space to be occupied, in use, by the portion of fruit to be squeezed, is defined between said first and second membranes.

### Brief Description of the Drawings

The previous and other advantages and features will be better understood from the following detailed description of embodiments, with reference to the attached drawings, which must be considered in an illustrative and non-limiting manner, in which:
Figure 1 shows a perspective view of the membrane arrangement of the second aspect of the invention and of the automatic fruit squeezer machine of the first aspect of the invention, for an embodiment, adopting an open position.
Figure 2 shows a perspective view of the membrane arrangement of Figure 1, for the same embodiment, but in a closed position where the first and second membranes are coupled to each other.
Figures 3A and 3B show the automatic fruit squeezer machine of the first aspect of the invention, for an embodiment, by means of respective side and perspective views, for a closed position where the lid is closed on the housing.
Figure 4 shows a perspective view of an upper portion of the automatic fruit squeezer machine of Figures 3A and 3B, where the lid is in an open position, and the membrane arrangement is not included.
Figure 5 shows a perspective view of the upper portion of the automatic fruit squeezer machine of Figure 4, with the lid also in an open position, but once the membrane arrangement is fitted between the lid and the housing support wall facing the lid.
Figure 6 shows a cross-sectional view of the upper portion of the automatic fruit squeezer machine of Figure 5 along a vertical cut plane, for a closed position where the lid is closed on the housing.
Figure 7 shows a further cross-sectional view of the upper portion of the automatic fruit squeezer machine of Figure 5 along another vertical cut plane which passes through the liquid outlet defined by the membrane arrangement.
Figure 8 shows the same cross-sectional view as Figure 7, but once a portion of fruit to be squeezed, particularly a half orange is placed within the membrane arrangement, previously to be squeezed.
Figure 9 shows the same cross-sectional view as Figure 8 but showing the half orange being squeezed.
Figures 10A and 10B show the rotating extracting bulb of the automatic fruit squeezer machine of the first aspect of the invention and of the above mentioned further aspect of the invention, for an embodiment, by means of respective side and top perspective views.

### Detailed Description of Several Embodiments

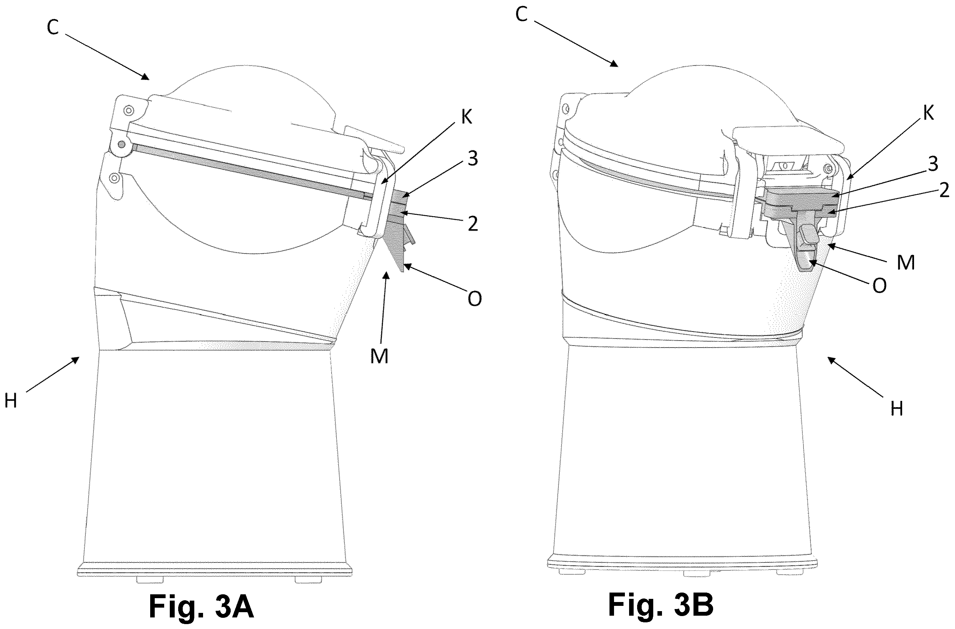

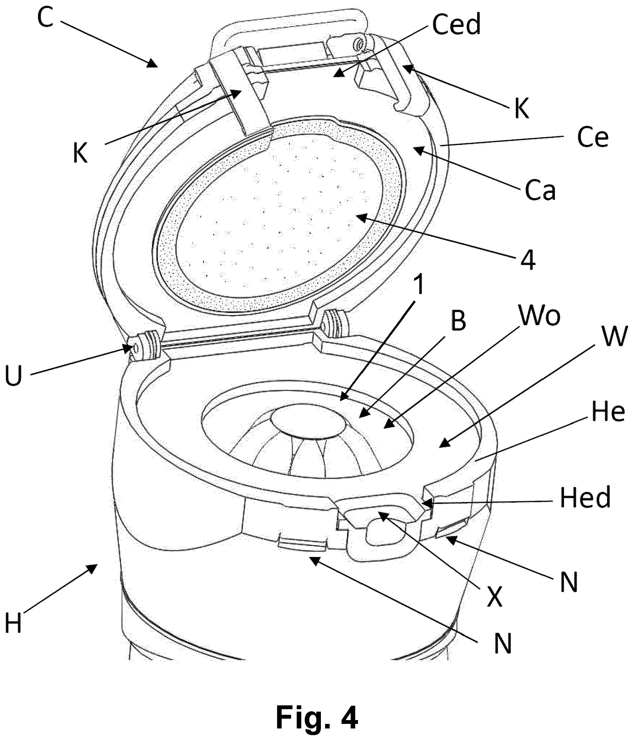

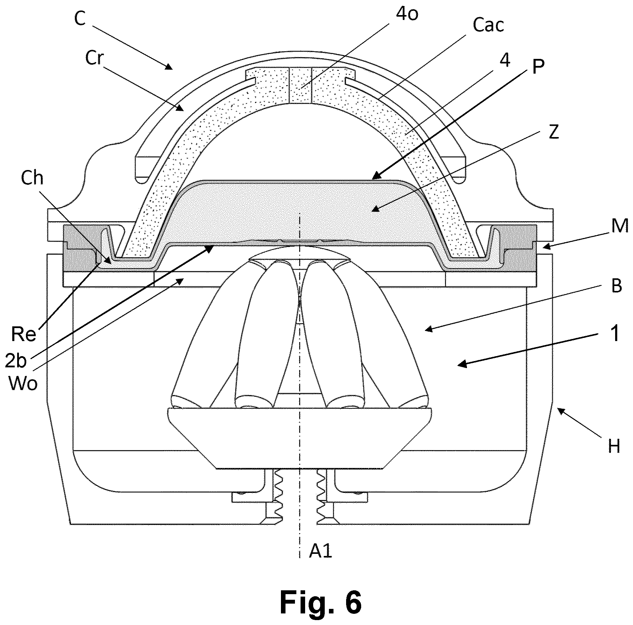

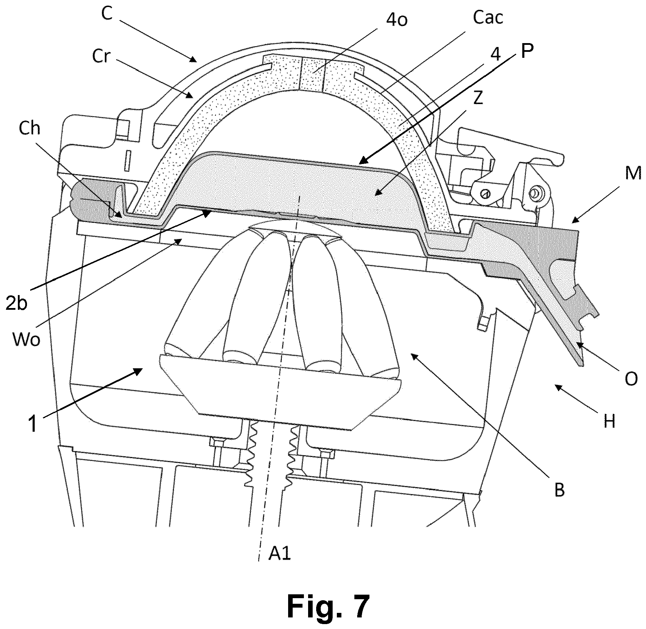

Figures 3A and 3B, and in part also Figures 4 to 9, show the automatic fruit squeezing machine of the first aspect of the present invention, for an embodiment for which the machine comprises:
- a motorised rotating squeezing element 1 for squeezing a pulp of a portion of fruit F when rotating about a rotating axis A1 (see Figures 6 to 9); and
- a membrane arrangement M, comprising a first membrane 2 and a second membrane 3.

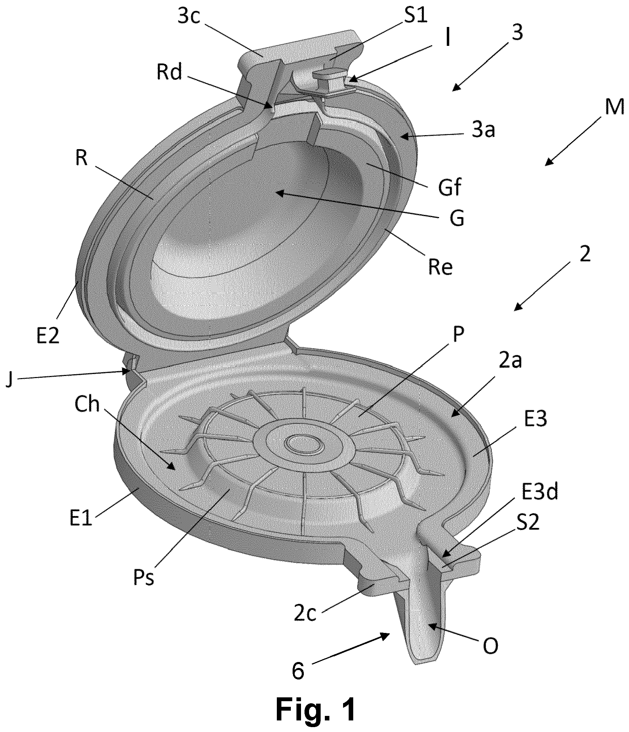

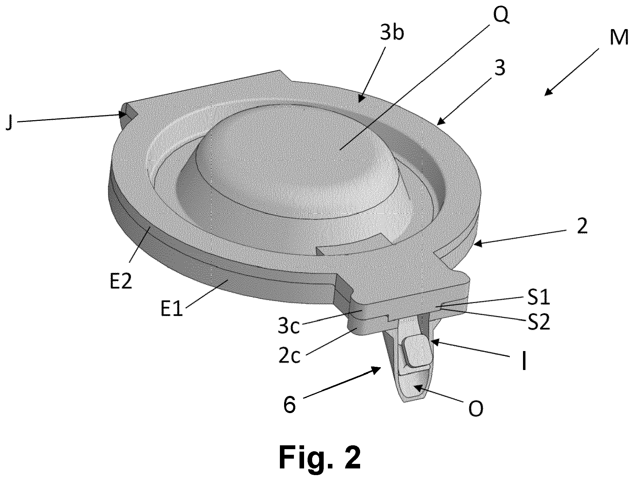

The membrane arrangement M of the second aspect of the invention and of the automatic fruit squeezer machine of the first aspect of the invention is shown in detail in Figures 1 and 2, and in part in Figures 3A, 3B, and 4 to 9.

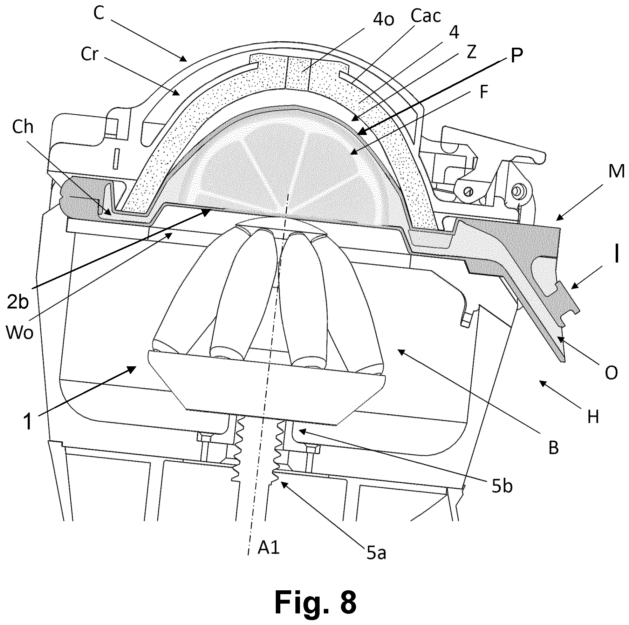

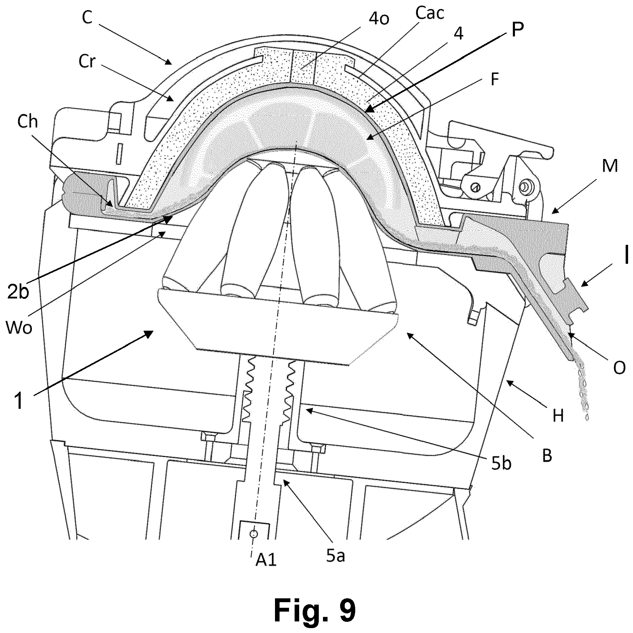

For that membrane arrangement M, both the first 2 and the second 3 membranes are at least partially made of an elastic material, a space Z to be occupied, in use, by the portion of fruit F to be squeezed, as shown in Figure 8 for a half orange, being defined between the first and second membranes 2, 3, the first membrane 2 being configured and arranged to be interposed between the motorised rotating squeezing element 1 and said space Z, in such a manner that the action of squeezing the pulp is carried out when the portion of fruit F is pressed against a first side 2a of the membrane 2 onto the motorised rotating squeezing element 1, when the motorised rotating squeezing element 1 is in operation and contacting a second side 2b of the membrane 2, as shown in Figure 9, and pushing the same, particularly a large central portion thereof, to deform it and thus transfer the squeezing action, i.e. a twisting pushing force, to the pulp of the half orange F to squeeze it.

For the illustrated embodiment, the first and second membranes 2, 3 are made to confine space Z, except for an opening defining a liquid outlet O for the expulsion of the juice obtained from the squeezed pulp of the portion of fruit F, as shown in Figure 2. Particularly, as especially shown in Figures 1 and 2, the first and second membranes 2, 3 are hinged to each other, by means of hinge J, and are couplable to each other, to, in use, encapsulate the portion of fruit F within space Z, as shown in Figures 8 and 9.

As shown In Figures 1 and 2, the first and second membranes 2, 3 comprise respective peripheral edges E1, E2 configured to retain in place the membrane arrangement M when the motorised rotating squeezing element 1 is in operation, i.e., when submitted to deformation, i.e., when in the situation shown in Figure 9. For the illustrated embodiment, those peripheral edges E1, E2 are rigid edges or comprise rigid cores (not shown).

For the illustrated embodiment, as clearly shown in Figure 1, the first membrane 2 has a central plateua-shaped region P with a convex side at the first side 2a defining a surface configured for positioning the portion of fruit F to be squeezed (see Figures 8 and 9) and a concave side at the second side 2b defining a recess for receiving the motorised rotating squeezing element 1, as shown in Figures 6 to 9.

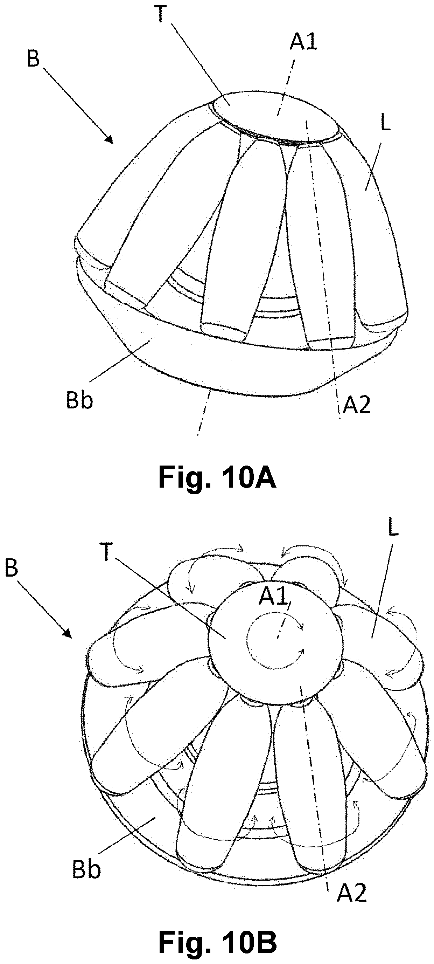

The portion of fruit F is to be placed on that central plateua-shaped region P, as shown in Figures 8 and 9, this central plateua-shaped region facilitating the centring of the portion of fruit F, and reduces the vertical path (along axis A1, see figures 6 to 9) that the motorised rotating squeezing element 1 must take to squeeze the portion of fruit F, as the extraction bulb B, which will be described below with reference to Figures 10A and 10B, contacts the base of the plateua-shaped region, i.e. the upper part of the recess defined by the concave side of the second side 2b, and thus remains at a higher height, reducing the journey of the motorised rotating squeezing element 1 and the time spent in squeezing.

On the other hand, the central plateua-shaped region P makes it possible to increase the overall size of the elastic region of the first membrane 2 which can then be deformed with less effort when the extraction bulb B acts thereon, in comparison with an elastic region of a smaller size.

For an embodiment, the height of the plateua-shaped region P is 8 mm.

As shown in Figure 1, the first membrane 2 comprises at the first side 2a, around the central plateua-shaped region P, a peripheral edge E3 having a discontinuity E3d, a channel Ch being defined between side walls Ps of the central plateau-shaped region P and the peripheral edge E3 for the flowing of the juice obtained from the squeezed pulp of the portion of fruit F towards a liquid outlet O at said discontinuity E3d, as shown in Figure 9.

Figure 1 also shows how the second membrane 3 has a central concave region G at a first side 3a facing the first side 2a of the first membrane 2, for fitting a convex portion of the portion of fruit F, as shown in Figures 8 and 9. As shown in Figure 1, the central concave region G is delimited by a perimeter frame Gf protruding from the first side of the second membrane 3, wherein a perimeter rim R with a larger diameter than the perimeter frame Gf also protrudes from the first side 3a of the second membrane 3, more than the perimeter frame Gf, such that a free edge Re of the perimeter rim R is configured to, in use, i.e. when the second membrane 3 is coupled to the first membrane 2, abut against a perimeter region of the bottom of the channel Ch, as shown in Figure 6, and wherein the perimeter rim R also has a discontinuity Rd configured to, in use, communicate with the discontinuity E3d of the peripheral edge E3 of the first membrane 2. Thus, the channel Ch is sealed by the perimeter rim except for the communicated discontinuities Rd, E3d defining the liquid outlet O.

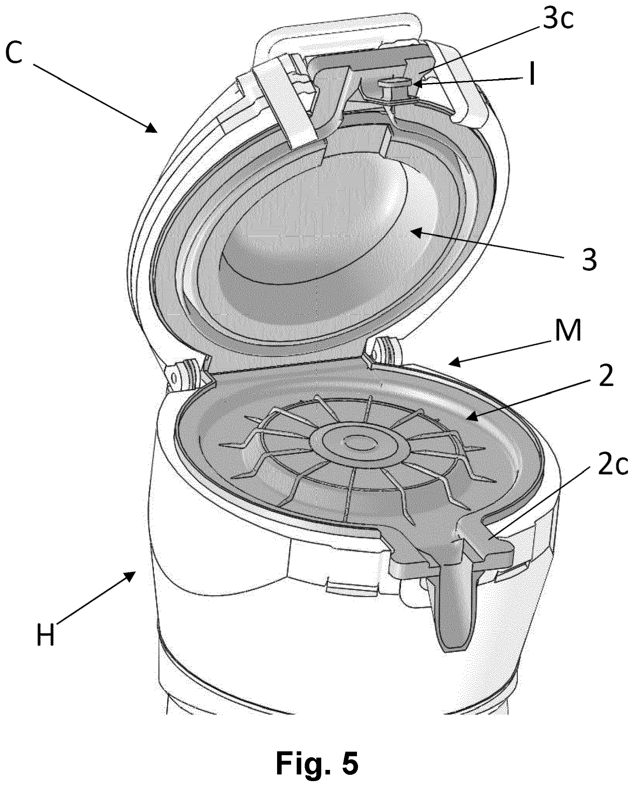

For the illustrated embodiment, the automatic fruit squeezing machine of the first aspect of the present invention further comprises a housing H, entirely shown in Figures 3A and 3b and in part in Figures 4 to 9, where the motorised rotating squeezing element 1 is housed, said housing H having a support wall W, shown in Figure 4, for removably supporting thereon the first membrane 2, by its second surface, as shown in Figure 5, the support wall W having a central through opening Wo configured and arranged for being at least partially traversed by the motorised rotating squeezing element 1 when in operation, to contact and push against the second side 2b of the first membrane 2 and thus elastically deform at least part of the first membrane 2 to squeeze the pulp of the portion of fruit F present in the space Z, as shown in Figure 9.

As shown in Figure 4, the housing H further comprises a displaceable cover lid C, by pivoting about hinge U (see Figure 4), configured and arranged to removably hold, at a first side Ca facing the support wall W, the second membrane 3, by a second side 3b thereof, as shown in Figure 2, such that, in use, the cover lid C and the second membrane 3 are displaced towards the support wall W and first membrane 2, respectively pivoting about hinges U and J, to close on the housing H, as shown in Figures 3A, 3B, and 6 to 9, then being secured thereto by means of clamps K (shown in Figures 3A, 3B, and 4) locking on recesses N (shown in Figure 4).

The displaceable cover lid C has, at its first side Ca, as shown in Figures 6 to 9, a central concave region Cac, and, as shown also in Figure 4, an elastic material element 4 being fitted into the central concave region Cac, adopting a corresponding concave shape and defining a concave recess, wherein the elastic material (such as silicone) of the elastic material element 4 is softer than the elastic material of the second membrane 3, a central convex region Q of a second side 3b of the second membrane 3, when the second membrane 3 is hold by the displaceable cover lid C, at least partially occupying that concave recess, and contacting and deforming the elastic material element 4 when, in use, the second membrane 3 is being elastically deformed towards said elastic material element 4 when the portion of fruit F to be squeezed is present in the space Z and is being squeezed, as shown in Figure 9, the deformation of the second membrane 3 causing it to adopt a concave shape to adapt to a convex outer surface of the portion of fruit F.

The central concave region Cac of the cover lid C together with the elastic material element 4 are intended to firmly hold the portion of fruit F, so that the latter does not move when being squeezed.

The elastic material element 4 has a predetermined thickness and hardness so that it automatically adapts to the irregularities of the portion of fruit F, allowing correct squeezing of the entire interior volume thereof, i.e., of the pulp, without leaving poorly squeezed areas or areas that are too squeezed (peeled).

Hence, the elastic material element 4 has the function of absorbing the irregularities of the portion of fruit F, acting as a cushion, distributing the pressure exerted by the motorised rotating squeezing element 1 and allowing the pulp to be squeezed to the fruit peel in a homogeneous way (this is very important because that fruit peel is usually different for different pieces of the same type of fruit, such as oranges).

As shown in Figures 6 to 9, the elastic material element 4 has a central through hole 4o communicated through a corresponding through hole of the central concave region Cac with a chamber Cr for air to escape there through. Indeed, it has been seen that it is necessary for the air to escape when the cover lid is closed on the housing H with the portion of fruit F enclosed within the membrane arrangement M.

For an embodiment, the geometries of the central concave region Cac and of the extraction bulb B, which will be described below with reference to Figures 10A and 10B, have been designed to automatically adapt to different portions of fruits, specifically to citrus fruits with diameters from 60mm to 82mm without the need for mechanical adjustments.

The first membrane 2 has a circular shape with a projecting portion 2c, as shown in Figure 1. This projecting portion 2c fits into the recess defined by the discontinuity Hed of annular frame He surrounding support wall W, as shown in Figure 4, when the first membrane 2 is supported on that support wall W, as shown in Figure 5.

Likewise, the second membrane 3 has also a circular shape with a projecting portion 3c, as shown in Figure 1, which also fits into a recess defined by the discontinuity Ced of annular frame Ce peripherally extending from the first side Ca of cover lid C, as shown in Figure 4, when the second membrane 3 is supported on that support wall W, as shown in Figure 5.

When the cover lid C is closed on the housing H and thus the second membrane 3 is coupled to the first membrane 2, projecting portions 3c, 2c and discontinuities Ced, Hed are respectively overlapped, and a protrusion S1 of projecting portion 3c fits into a recess S2 of projecting portion 2c, as shown in Figure 2.

In addition, part of a spout portion 6 downwardly extending from projecting portion 2c fits into a recess X defined under the discontinuity Hed (see Figure 4), so that the rest of that spout portion 6 remains outside of the housing H, through the liquid outlet O defined by part of the mouth of that spout portion 6 which is not closed by elastic closure arm I (having a grabbing portion so that a user can open/close that spout mouth).

For the illustrated embodiment, as especially shown in Figures 10A and 10B, the motorised rotating squeezing element 1 has a rotating extracting bulb B comprising a convex tip T fixed to freely rotate about the rotating axis A1, and a plurality of rollers L, having a cylinder or cylindroid shape, fixed to freely rotate along respective tilted longitudinal axes A2 that converge towards the convex tip T and that are located radially around said rotating axis A1, extending from a base Bb of the extracting bulb B to said convex tip T.

In addition to rotatory, this extracting bulb B is also displaceable lineally in an approaching/distancing movement (downwards/upwards according to the position illustrated in Figure 6) with respect to the membrane arrangement M, between the position illustrated in Figure 8, where the extracting bulb B just slightly projects through wall opening Wo and hardly contacts the first membrane 2, and the position illustrated in Figure 9, where a larger portion of the extracting bulb B projects through wall opening Wo and presses the first membrane 2.

That lineal displacement is provided by means of driving means 5a, 5b, which also provide the rotary displacement of the extracting bulb B, so that a combined motion is provided and transmitted to the pulp of the portion of fruit F through the first membrane 2.

At the position of Figure 9, and through intermediate positions between that illustrated in Figure 8 and that of Figure 9, the extraction bulb B presses and deforms the first membrane 2 and rotates, so that the rollers L freely rotate and press and slide along circumferential paths along the second side 2b of the first membrane 2.

By means of the convex tip T, no gap exists between the second side 2b of the first membrane 2 and the extraction bulb B, which together with the arrangement of the plurality of rollers L, which are contiguous to each other, makes the squeezing action to be applied to the entire pulp practically continuously.

List of references appearing on the figures:
Motorised rotating squeezing element: *1*
Portion of fruit: *F*
Rotating axis: *A 1*
Membrane arrangement: *M*
First membrane: *2*
First side of the first membrane: *2a*
Second side of the first membrane: *2b*
Projecting portion of the first membrane: *2c*
Recess of the projecting portion: *S2*
Spout portion downwardly extending from projecting portion: *6*
Second membrane: *3*
First side of the second membrane: *3a*
Second side of the second membrane: *3b*
Projecting portion of the second membrane: *3c*
Protrusion of the projecting portion: *S1*
Central convex region of the second side of the second membrane: *Q*
Space to be occupied in use by the portion of fruit: *Z*
Liquid outlet for the expulsion of juice: *O*
Hinge of the first and second membranes: *J*
Peripheral edge of the first membrane: *E1*
Peripheral edge of the second membrane: *E2*
Plateau shaped region of the first membrane: *P*
Side walls of the Plateau shaped region: *Ps*
Rotating extraction bulb: *B*
Base of the extraction bulb: *Bb*
Convex tip of the rotating extraction bulb: *T*
Rollers of the extraction bulb: *L*
Axes of the rollers: A2
Driving means for displacing the extraction bulb: *5a, 5b.*
Peripheral edge of the first membrane around the Plateau shaped region: *E3*
Discontinuity of the peripheral edge E3: *E3d*
Channel defined between side walls Ps and peripheral edge E3: *Ch*
Central concave region of the first side of the second membrane: *G*
Perimeter frame protruding from the first side of the second membrane: *Gf*
Perimeter rim protruding from the first side of the second membrane: *R*
Free edge of the perimeter rim R: *Re*
Discontinuity of the perimeter rim R: *Rd*
Housing of the squeezing machine: *H*
Support wall of the housing H: *W*
Central through opening of the support wall W: *Wo*
Annular frame surrounding the support wall W: *He*
Discontinuity of the annular frame He: *Hed*
Recess defined under the discontinuity Hed: *X*
Displaceable cover lid: *C*
First side of the cover lid: *Ca*
Central concave region of the first side of the cover lid: *Cac*
Chamber of the central concave region Cac: *Cr*
Annular frame peripherally extending from the first side Ca: *Ce*
Discontinuity of the annular frame Ce: *Ced*
Elastic material element fitted into the central concave region Cac: *4*
Central through hole of the elastic material element: *4o*
Hinge of the displaceable cover lid C: *U*
Clamps: *K*
Recesses for the clamps: *N*
Elastic closure arm: *I*

A person skilled in the art could introduce changes and modifications in the embodiments described without departing from the scope of the invention as it is defined in the attached claims.

## Claims

1. An automatic fruit squeezing machine, comprising:
- a motorised rotating squeezing element (1) for squeezing a pulp of a portion of fruit (F) when rotating about a rotating axis (A1); and
- a membrane arrangement (M), comprising a membrane (2) at least partially made of an elastic material and configured and arranged to be interposed between said motorised rotating squeezing element (1) and a space (Z) to be occupied, in use, by the portion of fruit (F) to be squeezed, in such a manner that the action of squeezing the pulp is carried out when the portion of fruit (F) is pressed against a first side (2a) of said membrane (2) onto the motorised rotating squeezing element (1), when said motorised rotating squeezing element (1) is in operation and contacting a second side (2b) of the membrane (2);
**characterized in that** said membrane (2) is a first membrane, and the membrane arrangement (M) further comprises a second membrane (3), also at least partially made of an elastic material, wherein said space (Z) to be occupied, in use, by the portion of fruit (F) to be squeezed, is defined between said first and second membranes (2, 3).

2. The automatic fruit squeezing machine of claim 1, wherein said first and second membranes (2, 3) are made to confine said space (Z), except for an opening defining a liquid outlet (O) for the expulsion of the juice obtained from the squeezed pulp of the portion of fruit (F).

3. The automatic fruit squeezing machine of claim 1 or 2, wherein said first and second membranes (2, 3) comprise or are joined to respective peripheral edges (E1, E2) configured to retain in place the membrane arrangement (M) when the motorised rotating squeezing element (1) is in operation.

4. The automatic fruit squeezing machine of any of the previous claims, wherein said first and second membranes (2, 3) are hinged to each other.

5. The automatic fruit squeezing machine of any of the previous claims, wherein said first and second membranes (2, 3) are couplable to each other, to, in use, encapsulate said portion of fruit (F) within said space (Z).

6. The automatic fruit squeezing machine of any of the previous claims, wherein said first membrane (2) has a central plateua-shaped region (P) with a convex side at said first side (2a) defining a surface configured for positioning the portion of fruit (F) to be squeezed and a concave side at said second side (2b) defining a recess for receiving the motorised rotating squeezing element (1).

7. The automatic fruit squeezing machine of claim 6, wherein the first membrane (2) comprises at the first side (2a), around said central plateua-shaped region (P), a peripheral edge (E3) having a discontinuity (E3d), a channel (Ch) being defined between side walls (Ps) of said central plateau-shaped region (P) and said peripheral edge (E3) for the flowing of the juice obtained from the squeezed pulp of the portion of fruit (F) towards a liquid outlet (O) at said discontinuity (E3d).

8. The automatic fruit squeezing machine of any of the previous claims, wherein said second membrane (3) has a central concave region (G) at a first side (3a) facing said first side (2a) of the first membrane (2), for fitting a convex portion of said portion of fruit (F).

9. The automatic fruit squeezing machine of claim 8 when depending on claim 7, wherein said central concave region (G) is delimited by a perimeter frame (Gf) protruding from said first side of the second membrane (3), wherein a perimeter rim (R) with a larger diameter than said perimeter frame (Gf) also protrudes from said first side (3a) of the second membrane (3), more than said perimeter frame (Gf), such that a free edge (Re) of said perimeter rim (R) is configured to, in use, abut against a perimeter region of the bottom of said channel (Ch), and wherein said perimeter rim (R) also has a discontinuity (Rd) configured to, in use, communicate with the discontinuity (E3d) of the peripheral edge (E3) of the first membrane (2).

10. The automatic fruit squeezing machine of any of the previous claims, further comprising a housing (H) where the motorised rotating squeezing element (1) is housed, said housing (H) having a support wall (W) for removably supporting thereon the first membrane (2), by its second surface, said support wall (W) having a central through opening (Wo) configured and arranged for being at least partially traversed by the motorised rotating squeezing element (1) when in operation, to contact and push against the second side (2b) of the first membrane (2) and thus elastically deform at least part of the first membrane (2) to squeeze the pulp of the portion of fruit (F) present in said space (Z).

11. The automatic fruit squeezing machine of claim 10, wherein said housing (H) further comprises a displaceable cover lid (C) configured and arranged to removably hold, at a first side (Ca) facing said support wall (W), the second membrane (3), by a second side (3b) thereof, such that, in use, the cover lid (C) and the second membrane (3) are displaced towards the support wall (W) and first membrane (2).

12. The automatic fruit squeezing machine of claim 11, wherein said displaceable cover lid (C) has, at said first side (Ca), a central concave region (Cac), and an elastic material element (4) being fitted into said central concave region (Cac), adopting a corresponding concave shape and defining a concave recess, wherein the elastic material of said elastic material element (4) is softer than the elastic material of the second membrane (3), a central convex region (Q) of a second side (3b) of the second membrane (3), when the second membrane (3) is hold by the displaceable cover lid (C), at least partially occupying said concave recess and contacting and deforming the elastic material element (4) when, in use, the second membrane (3) is being elastically deformed towards said elastic material element (4) when the portion of fruit (F) to be squeezed is present in said space (Z) and is being squeezed.

13. The automatic fruit squeezing machine of any of the previous claims, wherein said motorised rotating squeezing element (1) has a rotating extracting bulb (B) comprising a convex tip (T) fixed to freely rotate about said rotating axis (A1), or about an axis aligned or parallel thereto, and a plurality of rollers (L), having a cylinder or cylindroid shape, fixed to freely rotate along respective tilted longitudinal axes (A2) that converge towards said convex tip (T) and that are located radially around said rotating axis (A1), extending from a base (Bb) of the extracting bulb (B) to said convex tip (T).

14. A membrane arrangement (M) for an automatic fruit squeezing machine, wherein the membrane arrangement (M) comprises a membrane (2) at least partially made of an elastic material and configured and arranged to be interposed between a motorised rotating squeezing element (1) of the automatic fruit squeezing machine and a space (Z) to be occupied, in use, by the portion of fruit (F) to be squeezed, in such a manner that the action of squeezing the pulp is carried out when the portion of fruit (F) is pressed against a first side (2a) of said membrane (2) onto the motorised rotating squeezing element (1), when said motorised rotating squeezing element (1) is in operation and contacting a second side (2b) of the membrane (2), **characterized in that** said membrane (2) is a first membrane, and the membrane arrangement (M) further comprises a second membrane (3), also at least partially made of an elastic material, wherein said space (Z) to be occupied, in use, by the portion of fruit (F) to be squeezed, is defined between said first and second membranes (2, 3).

15. The membrane arrangement of claim 14, constituted as the membrane arrangement (M) of the automatic fruit squeezing machine of any of claims 1 to 13.
